(19) Europäisches Patentamt
European Patent Office
Office européen des brevets

(11) **EP 4 251 411 B1**

(12) **EUROPÄISCHE PATENTSCHRIFT**

(45) Veröffentlichungstag und Bekanntmachung des Hinweises auf die Patenterteilung:
**08.01.2025   Patentblatt 2025/02**

(21) Anmeldenummer: **21827184.9**

(22) Anmeldetag: **19.11.2021**

(51) Internationale Patentklassifikation (IPC):
**B29D 30/08** (2006.01)   **B29D 30/30** (2006.01)
**B29D 30/38** (2006.01)   **B29D 30/48** (2006.01)
**B60C 15/06** (2006.01)

(52) Gemeinsame Patentklassifikation (CPC):
**B29D 30/08; B29D 30/30; B29D 30/3007;**
**B29D 30/38; B29D 30/48;** B29D 2030/086;
B29D 2030/3085; B29D 2030/481; B29D 2030/486;
B60C 15/0607

(86) Internationale Anmeldenummer:
**PCT/DE2021/200196**

(87) Internationale Veröffentlichungsnummer:
**WO 2022/111774 (02.06.2022 Gazette 2022/22)**

(54) **VERFAHREN ZUR HERSTELLUNG EINES FAHRZEUGLUFTREIFENS**

METHOD FOR PRODUCING A PNEUMATIC TIRE FOR A VEHICLE

PROCÉDÉ DE PRODUCTION D'UN PNEUMATIQUE POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2020   DE 102020214938**

(43) Veröffentlichungstag der Anmeldung:
**04.10.2023   Patentblatt 2023/40**

(73) Patentinhaber: **Continental Reifen Deutschland GmbH**
**30175 Hannover (DE)**

(72) Erfinder: **KRAUS, Martin Josef**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 1 582 334     EP-A1- 1 897 681**
**EP-A2- 0 740 999**

**Beschreibung**

Die Erfindung betrifft ein Verfahren zur Herstellung eines Fahrzeugluftreifens mit einem Reifenwulst, bei welchem Reifenbauteile zur Ausbildung des Reifenwulstes einer Reifenaufbautrommel zugeführt, auf diese aufgelegt und im Bereich der Enden aneinandergefügt werden, wobei die Reifenbauteile mindestens einen Gummistreifen sowie zwei streifenförmige Textilstreifen umfassen.

Fahrzeugluftreifen bestehen aus einer innenliegenden Karkasse und einem außenliegenden Laufstreifen, die vor dem Vulkanisieren als Rohreifen aus Halbzeugen entweder zweistufig auf zwei verschiedenen Reifenaufbauanlagen oder einstufig auf einer einzigen Reifenaufbauanlage hergestellt werden. Die Karkasse umfasst eine Innenschicht, die bei Schlauchlosreifen als luftdichte, bei Schlauchreifen als nicht luftdichte Innenschicht ausgeführt ist, die eigentliche Karkasse mit einer Stahlkordeinlage oder aufgebaut aus einer oder mehreren Lagen aus textilen Fasern, durch die der Innendruck des Reifens aufgenommen und der Reifen in Form gehalten wird, Seitenstreifen, mittels derer der Reifen vor äußeren Beschädigungen geschützt wird sowie Reifenwülste, mittels derer der Reifen auf der Felge gehalten wird. Die Reifenwulste umfassen dabei Wulstkerne, bevorzugt aus Stahl sowie Kernprofile bzw. Kernreiter und Wulstverstärker, mittels derer die Fahr-, Lenk- und Federungseigenschaften des Reifens verbessert werden. Der grundsätzliche Aufbau eines solchen Fahrzeugluftreifens ist beispielsweise in der DE 44 39 010 C1 beschrieben. Textile Fasern sind Seile aus beispielsweise Polyamiden, Polyester, Polyolefinen, Rayon oder anderen Polymeren mit spezifischer Konstruktion und spezifischem Zug-Dehnungs-Verhalten.

Im Zuge der Herstellung eines Fahrzeugluftreifens werden die vorgenannten einzelnen Schichten bzw. Komponenten, die Reifenbauteile bilden, einer Reifenaufbauanlage mit einer rotierend antreibbaren Reifenaufbautrommel bevorzugt von einem vorgeschalteten Servicer in den benötigten Längenabschnitten oder endlos und in der vorgesehenen Reihenfolge einzeln zugeführt, auf die Reifenaufbautrommel aufgelegt und durch Rotation derselben um deren Umfang gewickelt, wobei anschließend die Enden der Reifenbauteile auf Stoß aneinander gefügt oder mit einem gewissen Überlappungsgrad übereinandergelegt und miteinander verbunden werden, was auch als Spleißen bezeichnet wird. Es versteht sich, dass im Falle der Zuführung eines Reifenbauteils in Form eines Endlosstreifens vor dem Verbinden der Enden zunächst ein Trennschnitt auf der Reifenaufbautrommel zu erfolgen hat, der im Falle der Zuführung zuvor bereits auf das erforderliche Längenmaß konfektionierter Längenabschnitte entfallen kann. Eine solche Reifenaufbauanlage mit Reifenaufbautrommel und vorgelagertem Servicer ist beispielsweise in der DE 10 2014 225 142 A1 offenbart.

Die EP 1 897 681 A1 offenbart ein Verfahren zur Herstellung eines Kernprofils, bei welchem ein kontinuierlich extrudiertes Apexprofil einseitig kontinuierlich mit einem zugeführten Textilstreifen verbunden wird und anschließend der gebildete Vorverbund einer Reifenbaumaschine zugeführt und nach dem Auflegen auf die benötigte Länge zugeschnitten wird.

Insbesondere bei stark beanspruchten Nutzfahrzeugreifen werden die Reifenwülste mit Wulstverstärkern ausgebildet, welche um den Wulstkern sowie benachbart zum Wulstkern angeordneten Wulstprofile bzw. Kernreiter und den Lagenumschlag verlaufend angeordnet werden. Verwendung finden sowohl Wulstverstärker aus Stahlkorden als auch Wulstverstärkungen aus textilen Fasern, üblicherweise werden diese in Lagen aus parallel oder annähernd parallel ausgerichteten Korden bzw. Fasern angeordnet. Wulstverstärker aus Stahlkorden und Wulstverstärkungen aus textilen Fasern können auch in einem Reifenwulst kombiniert eingesetzt werden. Um den unterschiedlichen Materialeigenschaften der Stahlkorde und der textilen Fasern von im Reifenwulst kombinierten Wulstverstärkungslagen Rechnung zu tragen, werden im Reifenwulst außerdem Gummistreifen oder -profile zur geometrischen Trennung von Lagenumschlag, Wulstverstärkern sowie weiterer Bauteile eingesetzt. Maßgeblich für die Abmaße von diesen Gummistreifen und -profilen sind insbesondere das Zug-Dehnungs-Verhalten und das Verhalten unter Kompression in Kord- bzw. Faserrichtung der gewählten Festigkeitsträger der Wulstverstärkerlagen sowie der Karkasseinlage.

Wulstverstärkungslagen aus parallel oder annähernd parallel ausgerichteten Korden bzw. Fasern können zudem parallel zueinander angeordnet werden, insbesondere textile Fasern sind hierfür geeignet. Hierbei können die textilen Fasern der unterschiedlichen Lagen, als kennzeichnendes Merkmal dieser Wulstverstärkung, ebenfalls parallel und damit gleichsteigend oder kreuzend und damit gegenläufig steigend zueinander angeordnet werden. Derartige Lagen aus parallel oder weitgehend parallel ausgerichteten textilen Fasern werden auch als Textilstreifen bezeichnet. Die Wulstverstärker werden aus Reifenbauteilen gebildet, die mindestens einen Gummistreifen sowie zwei streifenförmige Textilstreifen umfassen. Es ist bislang üblich und beispielsweise in der WO 2005/102741A1 offenbart, diese aus Gummistreifen und zwei Textilstreifen bestehenden Reifenbauteile zur Ausbildung des Wulstbereiches, insbesondere des Wulstverstärkers, der Reifenaufbautrommel einzeln aufeinanderfolgend zuzuführen, aufzulegen und an ihren Endbereichen miteinander zu verbinden, wobei üblicherweise der Gummistreifen benachbart zum Wulstkern und den Kernprofilen angeordnet und auf der dem Wulstkern und den Kernprofilen gegenüberliegenden Seite des Gummistreifens die beiden Textilstreifen angeordnet werden. Die Zuführung und das Auflegen der einzeln zugeführten Reifenbauteile ist jedoch sehr zeit- und arbeitsintensiv und verursacht unerwünschte Kapazitätsverluste in der Reifenkonfektion, erhöhte Produktionskosten sowohl durch erhöhten Arbeits- als auch Maschinenkostenanteil und ruft darüber hinaus das Problem hervor, dass bei jedem Auflegen eines einzelnen Reifenbauteils auf die Reifenaufbautrommel und Starten der Rotation derselben und/oder nicht exakter Synchronisation zwischen Umfangsgeschwindigkeit der Reifenaufbautrommel und Zuführgeschwindigkeit des Reifenbauteils hohe Zugkräfte auf das zugeführte Reifenbauteile ausgeübt werden, die im Falle der streifenförmigen Textilstreifen dazu führen können, dass die einzelnen in den Textilstreifen enthaltenen und üblicherweise unter einem vorbestimmten Winkel zur Längsachse verlaufenden Kords bzw. Fasern aus ihrer gewünschten Winkellage durch Überdehnung abgelenkt werden, was außerordentlich unerwünscht ist.

Aufgabe der Erfindung ist es daher, ein Verfahren der eingangs genannten Art vorzuschlagen, mit welchem sich Fahrzeugluftreifen unter Erhöhung der Kapazität und Reduzierung der Produktionskosten in verbesserter Qualität herstellen lassen.

Zur Lösung der gestellten Aufgabe wird erfindungsgemäß die Ausgestaltung des Verfahrens gemäß den Merkmalen des Patentanspruches 1 vorgeschlagen.

Vorteilhafte Ausgestaltungen und Weiterbildungen der Erfindung sind Gegenstand der abhängigen Ansprüche.

Das erfindungsgemäße Verfahren sieht vor, dass die Reifenbauteile vor der Zuführung zur Reifenaufbautrommel, beispielsweise in einem entsprechend konfigurierten Servicer, zu Abschnitten der benötigten Länge zugeschnitten, in der gewünschten Abfolge aufeinandergelegt und miteinander zu einem Kombinationsbauteil verbunden werden und anschließend das Kombinationsbauteil der Reifenaufbautrommel zugeführt wird.

Durch die erfindungsgemäße Ausbildung eines Kombinationsbauteils, welches die Reifenbauteile, d. h. mindestens einen Gummistreifen sowie zwei oder gegebenenfalls auch mehr streifenförmige Textilstreifen umfasst, wird ein Vorverbund gebildet und der Reifenaufbautrommel zugeführt, aus dem in einem einzigen Arbeitsgang das gewünschte Bauteil bzw. die Komponente des Fahrzeugluftreifens, beispielsweise ein Wulstverstärker ausgebildet wird. Es ist offensichtlich, dass auf diese Weise der Arbeits- und Zeitaufwand für die Reifenkonfektion signifikant verringert wird, was sich in verringerten Produktionskosten niederschlägt. Zudem werden die streifenförmigen Textilstreifen und der Gummistreifen zu einem formstabilen Kombinationsbauteil zusammengefasst, welches aufgrund der Festigkeit des Gummistreifens deutlich höhere Zugkräfte beim Auflegen auf die Reifenaufbautrommel aufnehmen kann, ohne dass die Orientierung der Fasern in den Textilstreifen in einem vorbestimmten Winkel beeinträchtigt oder verändert wird. Das erfindungsgemäße Verfahren erzielt somit auch eine Qualitätsverbesserung des letztlich hergestellten Fahrzeugluftreifens.

Nach einem Vorschlag der Erfindung umfasst das Kombinationsbauteil zwei Textilstreifen mit jeweils unter einem Winkel von etwa 30 bis 50° zur Längsachse verlaufenden Fasern oder Kords, wobei die Fasern der einzelnen Textilstreifen entgegengesetzt zueinander orientiert sind. Durch eine solche Orientierung unter einem Winkel von etwa 30 bis 50° zur Längsachse erreichen die Textilstreifen besondere Widerstandsfähigkeit, wie sie bei hochbeanspruchten Fahrzeugluftreifen, etwa Nutzfahrzeugreifen erwünscht sind. Selbstverständlich kann jedoch auch ein hiervon abweichender Winkel der Fasern im Bereich zwischen 0 und 90° je nach Anwendungsfall ausgewählt werden.

Da der im Kombinationsbauteil enthaltene Gummistreifen üblicherweise eine gewisse Dicke aufweist, die deutlich über derjenigen der Textilstreifen liegt, wird nach einem weiteren Vorschlag der Erfindung vorgeschlagen, dass der mindestens eine Gummistreifen auf eine solche Länge zugeschnitten wird, dass dessen Enden nach dem Zuführen des Kombinationsbauteiles auf die Reifenaufbautrommel auf Stoß aneinander zur Anlage kommen und in dieser Position miteinander verbunden werden.

Die Textilstreifen werden nach einem weiteren Vorschlag der Erfindung auf eine solche Länge zugeschnitten, dass deren Enden nach der Zuführung des Kombinationsbauteiles auf die Reifenaufbautrommel um eine Spleißzone einer Länge überlappen, die jeweils einem 4 bis 10 Fasern in den Textilstreifen umfassenden Längenabschnitt derselben entsprechen. Dies bringt es mit sich, dass die Textilstreifen mit einer im Vergleich zum Gummistreifen größeren Länge bereitgestellt und mit diesem zum Kombinationsbauteil verbunden werden.

Darüber hinaus wird nach weiterem Vorschlag der Erfindung das Kombinationsbauteil so ausgebildet, dass ein Ende des einen Textilstreifens das benachbarte Ende des Gummistreifens um eine Distanz zuzüglich der Summe aus der Länge der Spleißzone und einer Spleißprojektionslänge überragt und ein benachbartes Ende des anderen Textilstreifens das benachbarte Ende des einen Textilstreifens um eine Distanz zuzüglich der Summe aus der Länge der Spleißzone und einer Spleißprojektionslänge überragt.

Erfindungsgemäß können die Distanzen jeweils mindestens 18 mm betragen und sind vom Fachmann entsprechend den Gegebenheiten auszuwählen.

Nach einem weiteren Vorschlag der Erfindung werden die Enden der Textilstreifen mit einer parallel zu den Fasern in den Textilstreifen verlaufenden Schnittkante zugeschnitten.

Der exakten Längenbemessung der zugeschnittenen Abschnitte der Textilstreifen des Kombinationsbauteiles vor der Zusammenfügung zum Kombinationsbauteil kommt im Rahmen des erfindungsgemäßen Verfahrens eine entscheidende Bedeutung bei und richten sich nach der vorherrschenden Breite der Textilstreifen sowie dem Zuschnittswinkel der Textilstreifen, welcher wiederum von der Winkellage der Fasern in der Textilstreifen abhängen, insbesondere wenn nach der bevorzugten Ausgestaltung der Erfindung die Enden der Textilstreifen mit einer parallel zu den Fasern der Textilstreifen verlaufenden Schnittkante zugeschnitten werden. Aus diesen Daten lassen sich in der nachfolgend noch näher beschriebenen Weise sowohl eine Kordlänge der Textilstreifen, d. h. in die Länge der Schnittkante als auch die sich hieraus ergebende Spleißprojektionslänge der Enden der Textilstreifen berechnen.

Nach einem weiteren Vorschlag der Erfindung werden die Längen der Textilstreifen und des Gummistreifens im Kombinationsbauteil so bemessen, dass nach Zuführung auf die Reifenaufbautrommel die jeweiligen Enden der Textilstreifen und des Gummistreifens gemeinsam in einem Winkelsegment von etwa 50 bis maximal 85°, vorzugsweise 70-83° auf dem Umfang der Reifenaufbautrommel zum Liegen kommen. In einem solchen Falle ist es erfindungsgemäß möglich, die Enden der zum Kombinationsbauteil vorverbundenen Gummistreifen sowie der beiden streifenförmigen Textilstreifen auf Stoß bzw. mit der gewünschten Überlappung sukzessive zu verbinden, ohne dass die Reifenaufbautrommel gedreht werden muss, da ein Bediener dieses Winkelsegment von etwa 50 bis maximal 85°, vorzugsweise 70-83° auf dem Umfang der Reifenaufbautrommel ohne Drehung derselben erreichen kann. Es ist von daher im Rahmen der Herstellung des Fahrzeugluftreifens lediglich erforderlich, das Kombinationsbauteil im Rahmen einer Umdrehung der Reifenaufbautrommel auf den Umfang derselben aufzulegen und die Rotation der Reifenaufbautrommel sodann zu stoppen, wodurch alle zu verbindenden Enden des Kombinationsbauteiles gleichermaßen in einem Winkelsegment der Reifenaufbautrommel angeordnet sind und vom Bediener ohne Veränderung der Position der Reifenaufbautrommel sukzessive nach Maßgabe ihrer Schichtenreihenfolge im Kombinationsbauteil miteinander verbunden werden können.

Das erfindungsgemäße Verfahren kann im Rahmen der Herstellung eines Fahrzeugluftreifens für die Konfektionierung verschiedener Bauteile des Fahrzeugluftreifens eingesetzt werden. Insbesondere kann in den Fällen, in denen der Reifenwulst des Fahrzeugluftreifens einen Wulstkern, Kernprofile und ein Wulstverstärker aufweist, der Wulstverstärker aus einem erfindungsgemäßen Kombinationsbauteil gebildet und in der vorangehend geschilderten Weise auf die Reifenaufbautrommel aufgebracht werden.

Weitere Ausgestaltungen und Einzelheiten der Erfindung werden nachfolgend anhand von Ausführungsbeispielen in der Zeichnung erläutert. Es zeigen:

Figur 1        das erfindungsgemäße Verfahren in einer ersten Ausführungsform;

Figur 2        das erfindungsgemäße Verfahren in einer zweiten Ausführungsform;

Figur 3        im Vergleich zu den erfindungsgemäßen Verfahren nach Figur 1 und 2 ein Verfahren nach dem Stand der Technik;

Figur 4.1      einen Querschnitt durch einen nach dem erfindungsgemäßen Verfahren hergestellten Fahrzeugluftreifen;

Figur 4.2      in vergrößerter Darstellung einen Ausschnitt aus dem rechtsseitigen Querschnitt des Fahrzeugluftreifens nach Figur 4.1;

Figur 5        eine Aufsicht auf ein Kombinationsbauteil;

Figur 6        in vergrößerter Darstellung den rechtsseitigen Spleißbereich des Kombinationsbauteiles gemäß Figur 5;

Figur 7        die Aufsicht auf eine weitere Ausführungsform eines Kombinationsbauteiles;

Figur 8        die Aufsicht auf eine weitere Ausführungsform eines Kombinationsbauteiles;

Figur 9        eine schematische Darstellung des Kombinationsbauteiles gemäß Figuren 7 und 8 im Querschnitt;

Figur 10       eine alternative Ausgestaltung des Kombinationsbauteiles gemäß Figur 9;

Figur 11       eine Aufsicht auf eine weitere Ausführungsform eines Kombinationsbauteiles;

Figur 12       eine Aufsicht auf eine weitere Ausführungsform eines Kombinationsbauteiles;

Figur 13       eine schematische Darstellung des Kombinationsbauteiles gemäß Figuren 11 und 12 im Querschnitt;

Figur 14       eine alternative Ausgestaltung des Kombinationsbauteiles gemäß Figur 13;

Figur 15       eine perspektivische Darstellung einer nach dem erfindungsgemäßen Verfahren arbeitenden Reifenaufbautrommel;

Figur 16       die geometrische Herleitung der Berechnung verschiedener Längenmaße an den zugeschnittenen Enden der Textilstreifen des erfindungsgemäßen Kombinationsbauteiles.

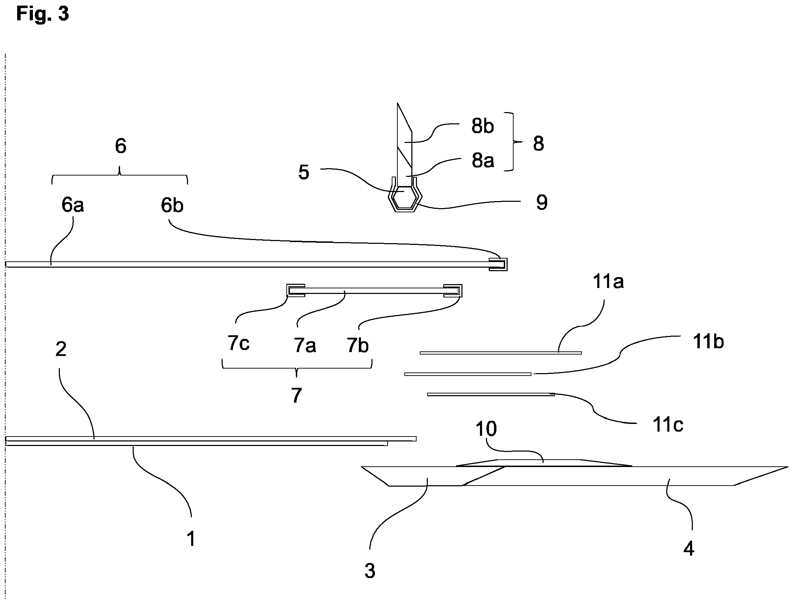

Aus der Figur 3 ist schematisch der Aufbau einer Karkasse eines Fahrzeugluftreifens dargestellt, wie er nach dem Stand der Technik auf einer nicht dargestellten Reifenaufbautrommel im sogenannten Einstufen-Verfahren aufeinanderfolgend aufgelegt wird. In der Reihenfolge von unten nach oben ist mit Bezugzeichen 3 ein Hornprofil und mit Bezugzeichen 4 die Seitenwand dargestellt, auf welche ein äußeres Wulstaußenprofil 10 aufgelegt wird. Es folgen die Innenschicht 1 und eine Zwischenschicht 2. Anschließend wird im Randbereich der Innenschicht 1 auf das äußere Wulstaußenprofil 10 ein Wulstverstärker aufgebracht, der aus zwei einzeln zugeführten Textilstreifen 11c und 11b sowie einem weiteren einzeln zugeführten und darauf aufgebrachten Gummistreifen 11a besteht. Die Textilstreifen 11c und 11b sowie der darauf aufgebrachten Gummistreifen 11a bilden insoweit Reifenbauteile zur Ausbildung des Reifenwulstes. Anschließend wird ein Stahlkordwulstverstärkerverband 7, bestehend aus einem Stahlkordwulstverstärker 7a und randseitig den Stahlkordwulstverstärker 7a etwa U-förmig einfassenden äußeren und inneren Kanteneinfassungen 7b und 7c aufgelegt. Hieran schließt sich ein Karkasseinlageverband 6 aus Karkasseinlage 6a und Kanteneinfassungen 6b an. Abschließend wird der aus einem Stahldraht gebildete und von einer Kernfahne 9 etwa U-förmig umgebene Wulstkern 5 mit vertikal anschließendem Kernprofil 8, bestehend aus einem unteren Kernreiter 8a und einem oberen Kernreiter 8b aufgelegt.

Charakteristisch für ein solches Verfahren nach dem Stand der Technik ist es, dass die Reifenbauteile zur Ausbildung des Wulstverstärkers des Reifenwulstes, d. h. der Gummistreifen 11a und die beiden Textilstreifen 11b und 11c jeweils gesondert in Form von einzelnen Streifen sequenziell, beginnend mit der Textilstreifen 11c der Reifenaufbautrommel zugeführt und in an sich bekannter Weise im Bereich ihrer Enden miteinander verbunden werden. Dies ist arbeits- und zeitintensiv und es werden insbesondere auf die zugeführten Textilstreifen 11c und 11b beim Auflegen auf die Reifenaufbautrommel hohe Zugkräfte ausgeübt.

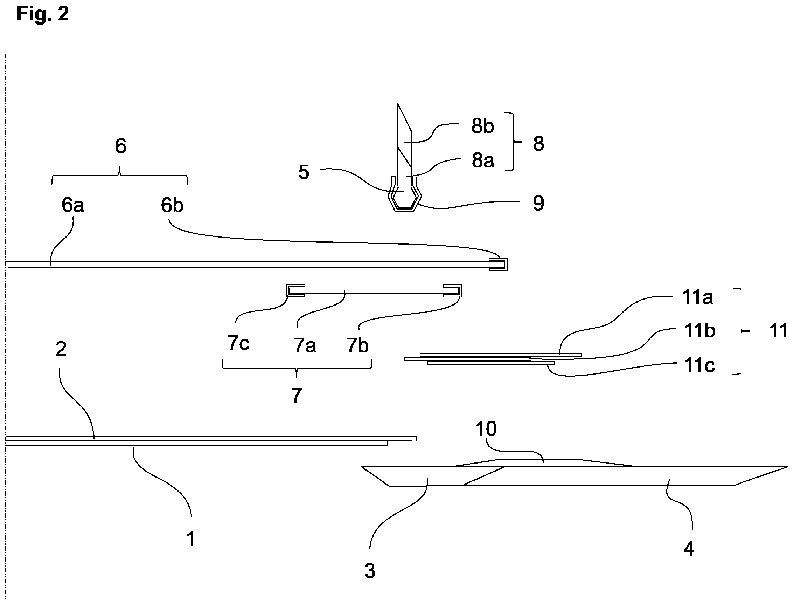

Um diesem Problem zu begegnen, wird bei dem in der Figur 2 dargestellten erfindungsgemäßen Verfahren, bei dem gleiche Teile gleiche Bezugzeichen wie in Figur 3 erhalten haben, sodass auf die Beschreibung insoweit Bezug genommen werden kann, zur Ausbildung des Wulstverstärkers ein Kombinationsbauteil 11 bestehend aus den beiden aufeinanderliegenden Textilstreifen 11c und 11b sowie dem darauf aufgebrachten Gummistreifen 11a bereits vor dem Auflegen auf die Reifenaufbautrommel gebildet, indem diese Reifenbauteile, d. h. Gummistreifen 11a und Textilstreifen 11b und 11c vor der Zuführung zur Reifenaufbautrommel zu den gewünschten Abschnitten in der nachfolgend noch im Detail erläuterten benötigten Länge zugeschnitten, aufeinandergelegt und miteinander zu dem Kombinationsbauteil 11 verbunden werden. Es ist somit bei der Herstellung des Fahrzeugluftreifens möglich, den solchermaßen vorgefertigten Wulstverstärker aus dem Kombinationsbauteil 11 in einem einzigen Arbeitsgang der Reifenaufbautrommel zuzuführen und auf diese aufzulegen. Die zum Kombinationsbauteil 11 vorab verbundenen Reifenbauteile Gummistreifen 11a, Textilstreifen 11b und Textilstreifen 11c werden somit gleichzeitig und gemeinsam der Reifenaufbautrommel 30 zugeführt. Nach der Zuführung des Kombinationsbauteiles 11 werden die jeweiligen Enden der Textilstreifen 11c, 11b und der Gummistreifen 11a unter Ausbildung des Wulstverstärkers jeweils miteinander verbunden. Die damit einhergehende Einsparung an Arbeitsgängen und die dadurch erzielbare Verkürzung der Prozessdauer sind offensichtlich.

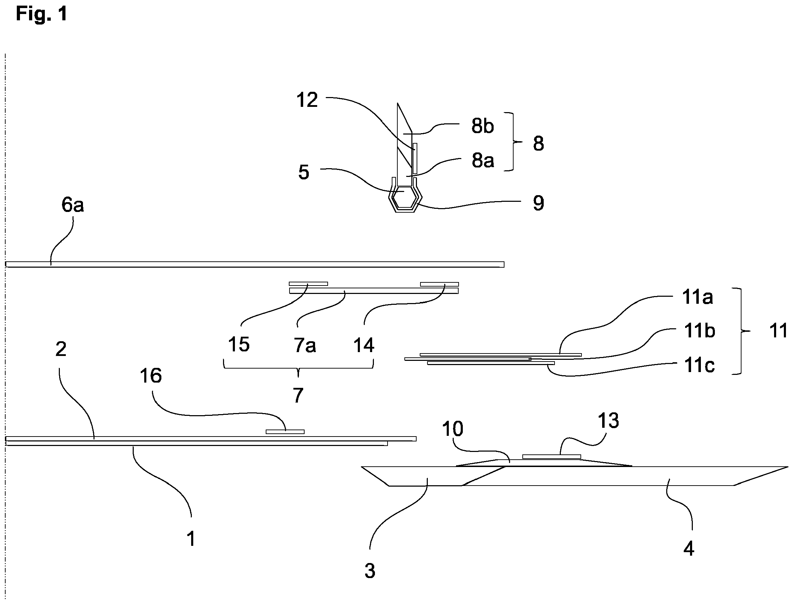

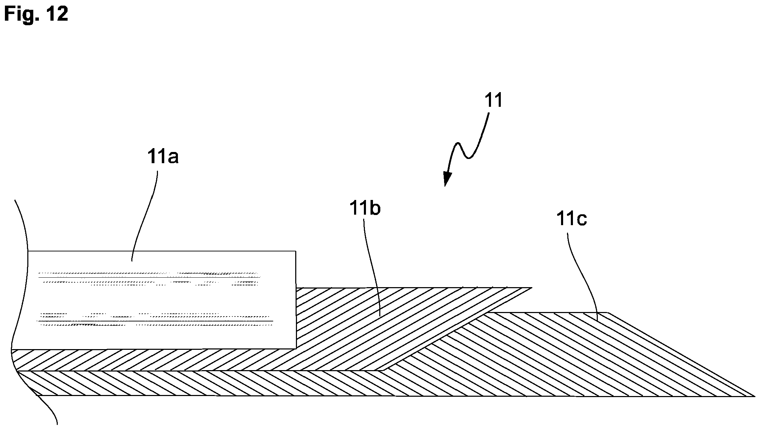

Auch das in der Figur 1 dargestellte alternative Ausführungsbeispiel nutzt ein solches Kombinationsbauteil 11 zur Ausbildung des Wulstverstärkers, wie bereits anhand der Figur 2 ersichtlich, jedoch unterscheidet sich das in der Figur 1 dargestellte Verfahren von denen der Figur 2 und auch dem Stand der Technik gemäß Figur 3 dadurch, dass auf das äußere Wulstaußenprofil 10 noch ein weiterer Gummistreifen 13 und auf die Zwischenschicht 2 ein weiterer Gummistreifen 16 aufgelegt wird und darüber hinaus der Stahlkordwulstverstärkerverband 7 und der die Karkasseinlage 6a ohne Kanteneinfassungen 6b bzw. 7b und 7c auskommen. Anstelle der Kanteneinfassungen 7b und 7c weist der Stahlkordwulstverstärker 7a im Ausführungsbeispiel gemäß Figur 12 weitere Gummistreifen 14, 15 auf dem radial äußeren bzw. inneren Ende des Stahlkordwulstverstärkers 7a auf. Ferner ist im Anschluss an die Kernfahne 9 im Ausführungsbeispiel gemäß Figur 1 noch ein weiterer Gummistreifen 12 seitlich an den Kernreitern 8a und 8b anliegend vorgesehen.

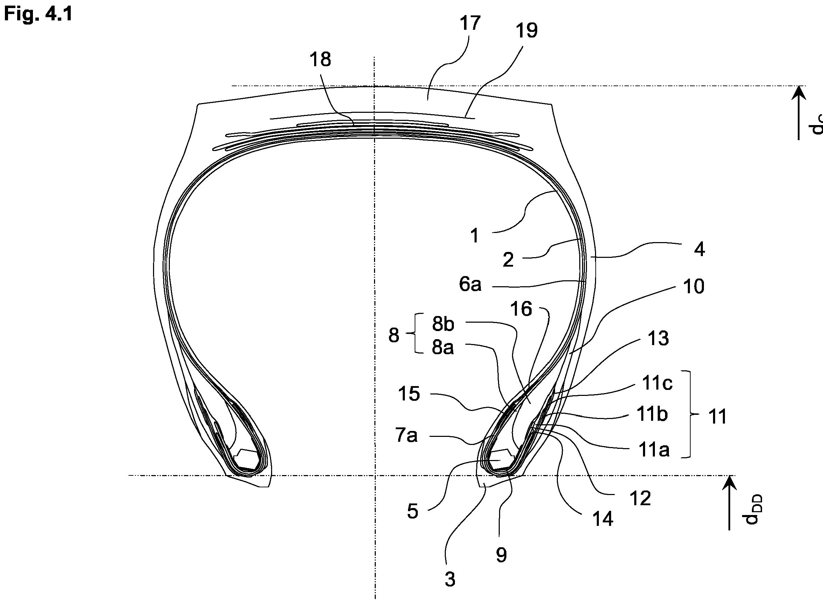

Der nach dem erfindungsgemäßen Verfahren gemäß Figur 1 hergestellte Fahrzeugluftreifen weist nach seiner Fertigstellung den aus der Figur 4.1 ersichtlichen Querschnitt auf, aus dem die Lage der vorangehend erläuterten Bauteile ersichtlich ist. Zusätzlich sind weitere Bauteile in ihrer Position ersichtlich, nämlich die im Anschluss an die Karkassherstellung aus einem Laufstreifen gebildete Lauffläche 17 und der Gürtel 18. Zusätzlich erkennt man die Profiltiefenlinie 19 sowie den Wulst-Innendurchmesser $d_{DD}$ des Fahrzeugluftreifens, korrespondierend zum Felgen-Eckpunkt-Durchmesser nach ETRTO sowie den Außendurchmesser $d_G$ des Fahrzeugluftreifens ohne Felge, gemessen im Reifenzenit, nach ETRTO.

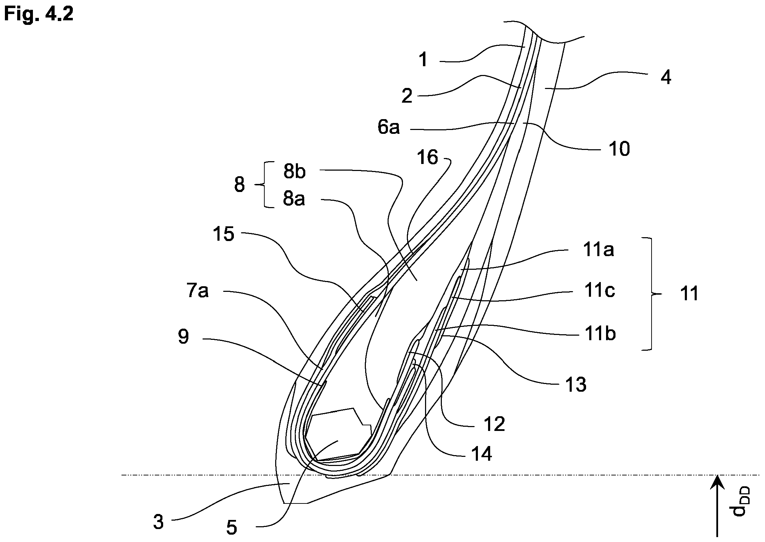

Die exakte Anordnung der einzelnen Reifenbauteile ist aus der vergrößerten Darstellung gemäß Figur 4.2 im Wulstbereich des Fahrzeugluftreifens ersichtlich.

Aus den Darstellungen ist ersichtlich, dass bei Montage des Fahrzeugluftreifens gemäß Figuren 4.1 und 4.2 auf einer nicht dargestellten Felge der Wulstverstärker, gebildet aus dem die Textilstreifen 11a und 11b sowie den Gummistreifen 11c umfassenden Kombinationsbauteil 11 im Wulstbereich radial außerhalb zum Wulstkern 5 und dem Kernprofil angeordnet ist, wobei der Gummistreifen 11c auf der dem Wulstkern 5 und dem Kernprofil 8 zugewandten Seite angeordnet ist.

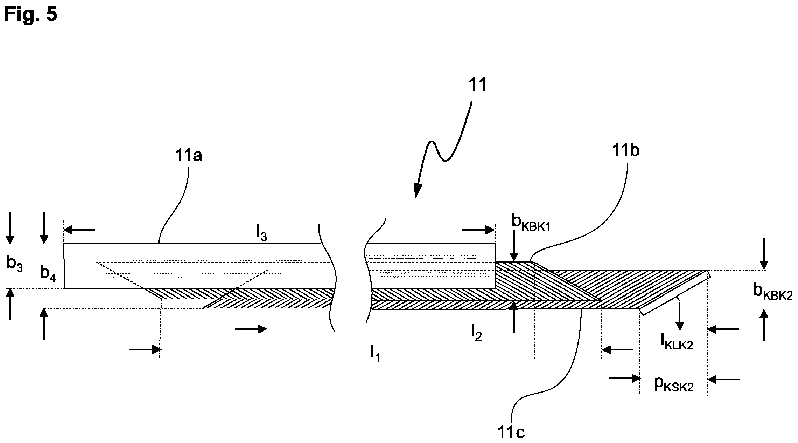

Aus der Figur 5 ist eine erste Ausführungsform eines solchen, den Wulstverstärker bildenden Kombinationsbauteiles 11 in der Aufsicht dargestellt. Ausgehend von dem zuoberst liegenden und in der Aufsicht als rechteckförmiger Streifen ausgeführten Gummistreifen 11a einer Länge $l_3$ und einer Breite $b_3$ wird unterhalb desselben der Textilstreifen 11b angeordnet, der eine Länge $l_1$ und eine Breite $b_{KBK1}$ aufweist. Nochmals unterhalb des Textilstreifens 11b ist der Textilstreifen 11c mit einer Länge $l_2$ und einer Breite $b_{KBK2}$ angeordnet. Der Textilstreifen 11b ist mit einem seitlichen Versatz in Bezug auf die Längsachse des Gummistreifens 11a angeordnet und steht seitlich über den Längsrand des Gummistreifens 11a über, ebenso ist der Textilstreifen 11c mit einem entsprechenden Versatz zum Textilstreifen 11b angeordnet, sodass sich insgesamt eine gegenüber den Einzelbreiten $b_3$, $b_{KBK1}$ und $b_{KBK2}$ vergrößerte Gesamtbreite $b_4$ des Kombinationsbauteiles 11 ergibt.

Darüber hinaus sind am in der Darstellung gemäß Figur 5 rechten Längsrand des Gummistreifen 11a der Textilstreifen 11b axial vorstehend und der Textilstreifen 11c in Bezug auf den Textilstreifen 11b nochmals axial weiter vorstehend angeordnet. Überdies erkennt man, dass bei den beiden Textilstreifen 11b und 11c jeweils unter einem Winkel von etwa 30-50° zur Längsachse verlaufende Fasern vorgesehen sind, die in den Textilstreifen 11b und 11c entgegengesetzt zueinander orientiert sind. Während der Gummistreifen 11a in der Aufsicht betrachtet einen rechteckförmigen Grundriss aufweist, sind die beiden Textilstreifen 11b und 11c an ihren über den Gummistreifen 11a vorstehenden Enden mit einer parallel zu den jeweiligen Fasern verlaufenden Schnittkante spitzwinklig ausgeführt.

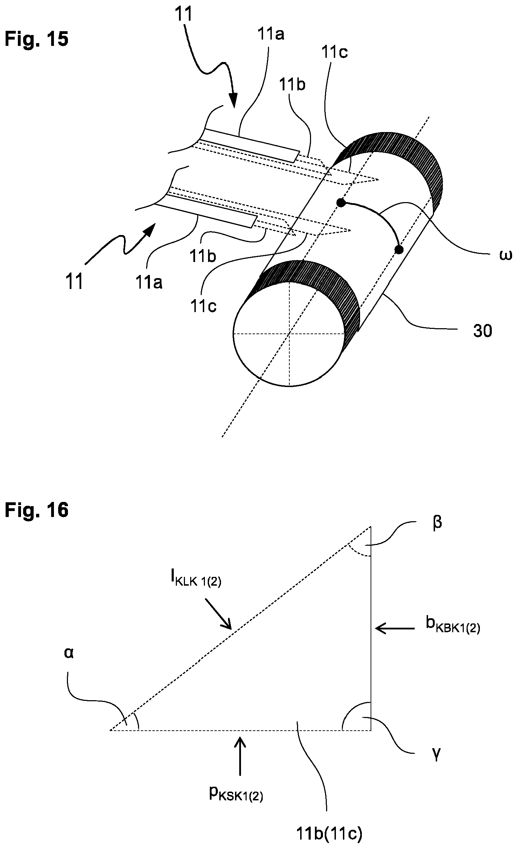

Durch eine solche Konfiguration wird sichergestellt, dass das Kombinationsbauteil 1 gemäß der schematischen Darstellung in Figur 15 beim Zuführen auf eine Reifenaufbautrommel 30 zunächst mit dem in Bezug auf den Gummistreifen 11a am weitesten vorstehenden Textilstreifen 11c auf den Umfang aufgelegt wird, wobei bei beginnender Drehung der Reifenaufbautrommel 30 anschließend der Textilstreifen 11b und schließlich auch der nacheilenden Gummistreifen 11a des Kombinationsbauteiles 11 um den Umfang der Reifenaufbautrommel 30 gewickelt wird.

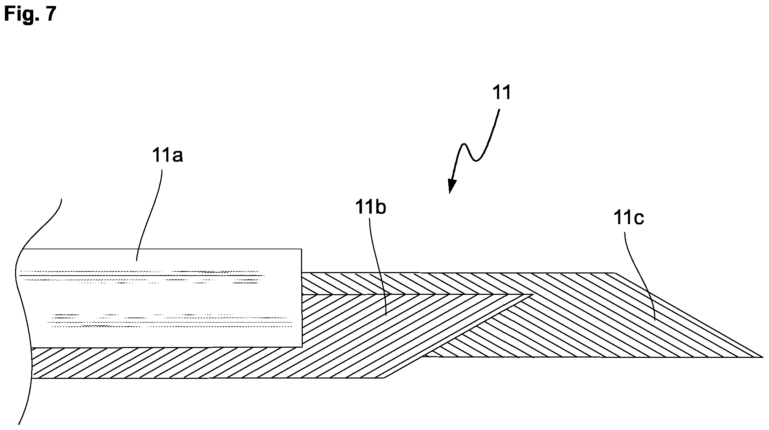

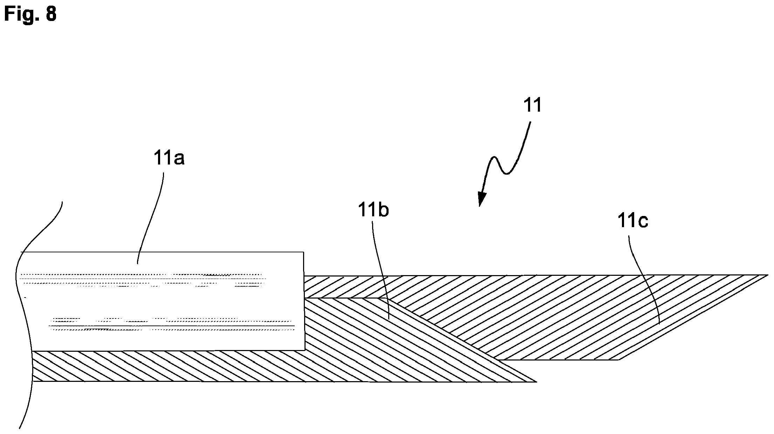

Neben der aus der Figur 5 ersichtlichen Konfiguration und Anordnung der Gummistreifen 11a und Textilstreifen 11b, 11c können gemäß Figuren 7 und 8 auch Anordnungen gewählt werden, bei denen der Textilstreifen 11b seitlich weiter über den Gummistreifen 11a hinausragt als der Textilstreifen 11c. Auch können die Winkel, in denen die Fasern der Textilstreifen zur Längsachse verlaufen und dementsprechend auch die Schnittkanten der Textilstreifen 11b und 11c unterschiedlich orientiert sein, wie sich aus einer vergleichenden Betrachtung der Figuren 7 und 8 ergibt.

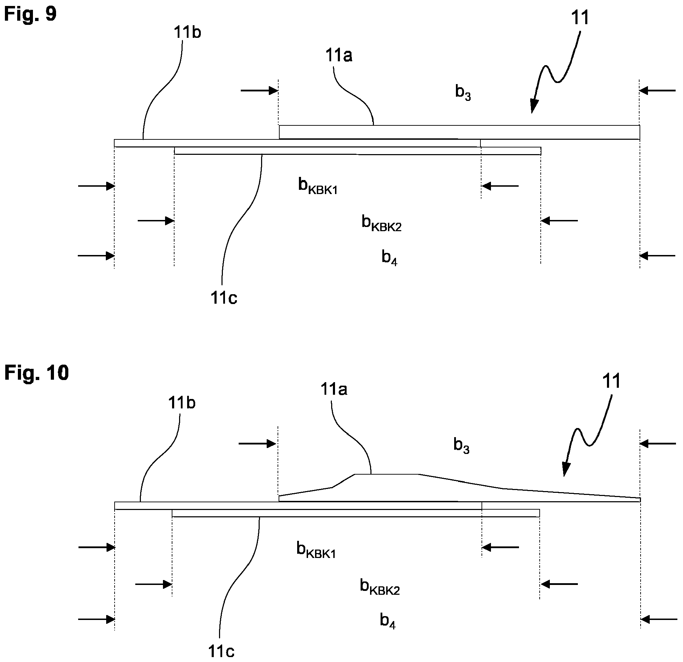

Gemäß den Querschnittsdarstellungen in Figuren 9 und 10 kann es sich überdies beim Gummistreifen 11a sowohl um einen glatten Streifen gemäß Figur 9 als auch um einen oberflächlich profilierten Streifen gemäß Figur 10 handeln.

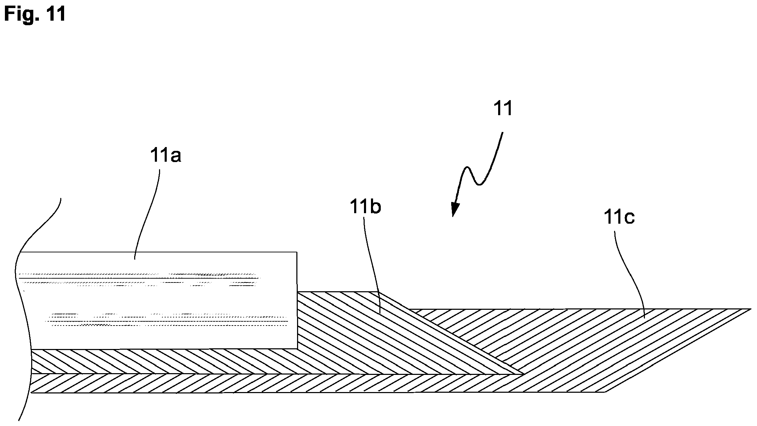

Die Figur 11 zeigt in Anlehnung an das Ausführungsbeispiel gemäß Figur 5 eine Ausführungsform des Kombinationsbauteiles 11, wie es auch gemäß Figur 15 für den rechten und linken Wulst verwendet und auf die Reifenaufbautrommel 30 aufgelegt wird, wohingegen Figur 12 die vergleichbare Konfiguration mit entgegengesetzter Orientierung der Fasern in den beiden Textilstreifen 11b und 11c darstellt.

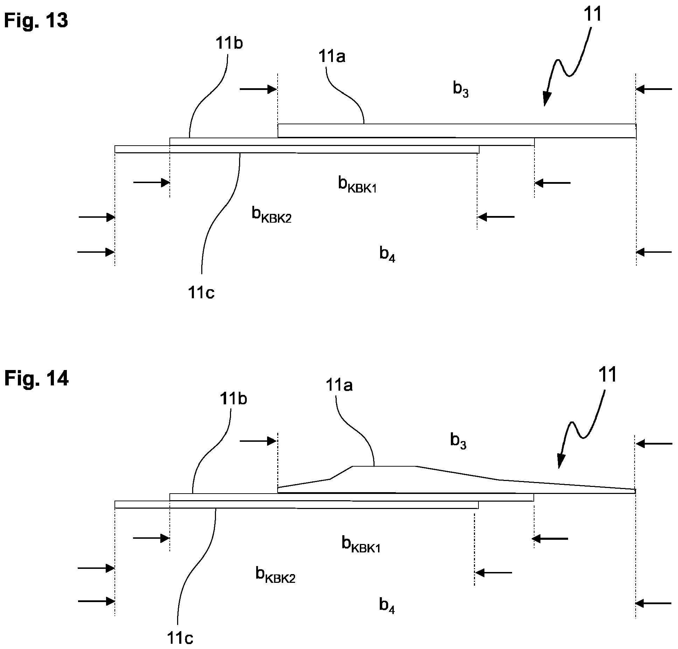

Auch bei diesen Ausführungsformen gemäß Figuren 11 und 12 kann der Gummistreifen 11a gemäß der Darstellung in Figur 13 als glatter Streifen oder gemäß der Darstellung in Figur 14 als oberflächlich profilierter Streifen ausgeführt sein.

Wesentlich bei allen vorangehend erläuterten und in den Figuren dargestellten Ausführungsformen ist es, dass die Einzellängen $l_1$, $l_2$ und $l_3$ der Textilstreifen 11b, 11c und des Gummistreifens 11a so bemessen werden, dass sich die jeweiligen Enden derselben nach der Zuführung auf die Reifenaufbautrommel 30 gemäß der Darstellung in Figur 15, bei der der Umfang der Reifenaufbautrommel 30 durch eine vollständige Umdrehung vom jeweiligen Kombinationsbauteil 11 umschlossen wird, in der gewünschten Weise verbinden lassen.

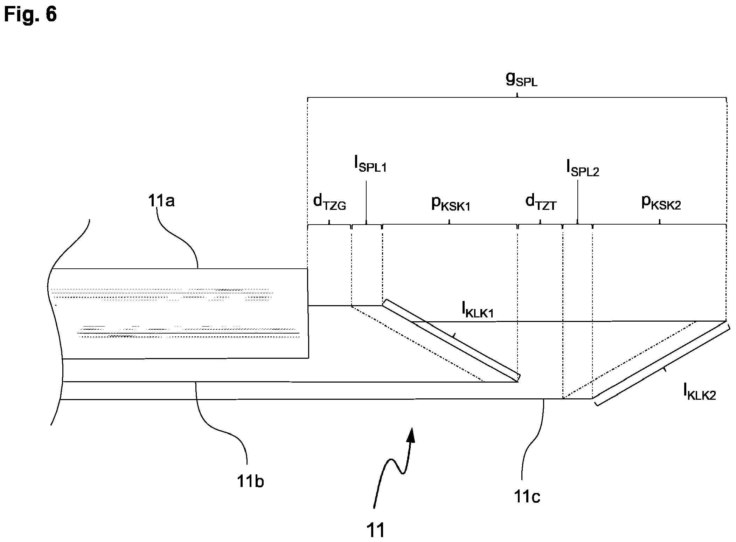

Hinsichtlich des eine gewisse Materialstärke aufweisenden Gummistreifens 11a ist es erforderlich, dass dieser möglichst exakt den zur Verfügung stehenden Umfang auf der Reifenaufbautrommel 30 abbildet und eine entsprechende Länge $l_3$ aufweist, sodass dessen Enden nach dem Zuführen des Kombinationsbauteiles 11 auf die Reifenaufbautrommel 30 auf Stoß aneinander zur Anlage kommen und miteinander verbunden werden können. Bei den beiden Textilstreifen 11b und 11c hingegen ist es erwünscht, dass deren Enden nach der Zuführung des Kombinationsbauteiles 11 auf die Reifenaufbautrommel um eine Überlappungsbreite $l_{SPL1}$ bzw. $l_{SPL2}$ gemäß Darstellung in Figur 6 einander überlappen, die jeweils 4 bis 10 der in den Textilstreifen 11b und 11c angeordneten Fasern umfasst. Dies entspricht in der Praxis etwa 4 mm bis 10 mm, da die hier üblicherweise verwendeten Gewebe Fadendichten von ca. 80 epdm bis zu 110 epdm aufweisen ("end count per decimeter").

Auf diese Weise werden Spleißzonen in der jeweiligen Überlappungsbreite $l_{SPL1}$ bzw. $l_{SPL2}$ gebildet, in denen die Textilstreifen 11b, 11c im Bereich ihrer Enden mit einer überlappenden Verbindung verbunden werden können.

Da darüber hinaus die einzelnen Komponenten des Kombinationsbauteiles 11 sukzessive aufeinanderfolgend entsprechend der Reihenfolge ihres Auflaufens auf die Reifenaufbautrommel 30 im Bereich ihrer Enden miteinander verbunden werden, d. h. im Beispiel gemäß Figur 15 zunächst die Enden des Textilstreifens 11c, dann die Enden des Textilstreifens 11b und schließlich die Stoßverbindung im Bereich des Gummistreifens 11a ist es von besonderem Vorteil, wenn die Gesamtlänge $g_{SPL}$ der kombinierten Spleiße der Textilstreifen 11b und 11c, d. h. die Gesamtlänge, mit welcher diese über das zuerst auf die Reifenaufbautrommel 30 auf laufende Ende des Gummistreifens 11a überstehen, so bemessen ist, dass die jeweiligen Enden der Textilstreifen 11b, 11c und des Gummistreifens 11a gemeinsam in einem Winkelsegment ω auf dem Umfang der Reifenaufbautrommel 30 zum Liegen kommen, welches im dargestellten Ausführungsbeispiel gemäß Figur 15 etwa 83° beträgt. Hierdurch ist sichergestellt, dass sämtliche Spleißverbindungen der Textilstreifen 11b und 11c sowie des Gummistreifens 11a ohne weitere Drehung der Reifenaufbautrommel 30 von einem entsprechenden Bediener in diesem Segment vorgenommen werden können. Die Reifenaufbautrommel 30 muss von daher lediglich bei der Zuführung des Kombinationsbauteiles 11 eine vollständige Umdrehung durchlaufen, bis sämtliche Enden des Kombinationsbauteiles 11 im Winkelsegment ω liegen. Sodann kann die Reifenaufbautrommel 30 festgesetzt werden und der Bediener kann sukzessive die Enden der Textilstreifen 11c, 11b und des Gummistreifens 11a miteinander verbinden.

Um diese auf den Umfang der Reifenaufbautrommel 30 abgestimmte Gesamtlänge $g_{SPL}$ gemäß Figur 6 zu erreichen, sind neben den vorangehend bereits erläuterten Überlappungsbreiten $l_{SPL1}$ bzw. $l_{SPL2}$ weitere Maße zu beachten, die sich insbesondere nach dem Verlauf der unter einem Winkel zur Längsachse verlaufenden Fasern in den Textilstreifen 11b, 11c richtet. Da der Zuschnitt des Endbereichs der Textilstreifen 11b, 11c stets parallel zu den jeweiligen Faserverläufen erfolgt, ergibt sich daraus die der Länge der Schnittkante entsprechende jeweilige Kordlänge $l_{KLK1}$ des Textilstreifens 11b und $l_{KLK2}$ des Textilstreifens 11c sowie die gesuchte Spleißprojektionslänge $p_{KSK1}$ des Textilstreifens 11b und $p_{KSK2}$ des Textilstreifens 11c.

Gemäß der Darstellung in Figur 16 lassen sich die Kordlängen $l_{KLK1}$ bzw. $l_{KLK2}$ sowie die Spleißprojektionslängen $p_{KSK1}$ bzw. $p_{KSK2}$ aus der jeweils gegebenen Zuschnittsbreite $b_{KBK1}$ bzw. $b_{KBK2}$ der Textilstreifen 11b, 11c und dem jeweiligen Zuschnittswinkel α, unter dem die Fasern in den Textilstreifen 11b, 11c in Bezug zur Längsachse verlaufen, aufgrund der gegebenen Relation

$$\sin \alpha = b_{KBK1(2)} / l_{KLK1(2)}$$

unter Anwendung des Sinussatzes berechnen zu:

$$b_{KBK1(2)} / \sin \alpha = p_{KSK1(2)} / \sin \beta = l_{KSK1(2)} / \sin \gamma$$

Unter Einsatz eines entsprechenden Berechnungsprogramms lassen sich damit Tabellen für die gesuchten Abmessungen aus den gegebenen Abmessungen und Winkeln der eingesetzten Textilstreifen 11b und 11c leicht berechnen.

Darüber hinaus werden die einzelnen Spleißzonen der Textilstreifen 11b und 11c sowie des Gummistreifens 11a jeweils noch voneinander um die Distanzen $d_{TZC}$ bzw. $d_{TZT}$ gemäß der Darstellung in Figur 6 beabstandet, die zur Erleichterung der Handhabung jeweils mindestens 18 mm betragen sollten. Durch eine entsprechende Auswahl der Distanzen $d_{TZG}$ bzw. $d_{TZT}$ kann der für die Anordnung der Spleißverbindungen zur Verfügung stehende Bereich auf dem Winkelsegment ω der Reifenaufbautrommel 30 ausgenutzt werden.

Im Ergebnis ermöglicht das vorangehend erläuterte Verfahren, mehrere zur Ausbildung einer Reifenkomponente verwendete Bauteile in Form von Gummistreifen 11a und Textilstreifen 11b, 11c zu einem Kombinationsbauteil 11 vorbestimmter Einzellängen vorzukonfektionieren und das Kombinationsbauteil 11 in einem einzigen Arbeitsgang auf die Reifenaufbautrommel 30 aufzulegen, wodurch eine erhebliche Einsparung beim Arbeits- und Zeitaufwand erzielt wird und überdies der gebildete Verbund im Kombinationsbauteil geringeren Zugkräften beim Auflegen auf die Reifenaufbautrommel 30 unterworfen wird, sodass letztlich auch eine höhere Qualität des erzeugten Fahrzeugluftreifens erzielbar ist.

Neben der vorangehend erläuterten Ausgestaltung eines Wulstverstärkers aus einem derartigen Kombinationsbauteil 11 sind auch verschiedene andere Reifenbauteile und Anwendungen im Zuge der Herstellung eines Fahrzeugluftreifens in der geschilderten Weise herstellbar bzw. möglich.

**Patentansprüche**

1. Verfahren zur Herstellung eines Fahrzeugluftreifens mit einem Reifenwulst, bei welchem Reifenbauteile zur Ausbildung des Reifenwulstes einer Reifenaufbautrommel (30) zugeführt, auf diese aufgelegt und im Bereich der Enden aneinander gefügt werden, wobei die Reifenbauteile mindestens einen Gummistreifen (11a) sowie streifenförmige Textilstreifen (11b, 11c) umfassen, **dadurch gekennzeichnet, dass** die Reifenbauteile vor der Zuführung zur Reifenaufbautrommel (30) zu Abschnitten in der benötigten Länge zugeschnitten, aufeinander gelegt und miteinander zu einem Kombinationsbauteil (11) verbunden werden und anschließend das Kombinationsbauteil (11) der Reifenaufbautrommel (30) zugeführt wird.

2. Verfahren nach Anspruch 1, **dadurch gekennzeichnet, dass** das Kombinationsbauteil (11) zwei Textilstreifen (11b, 11c) mit jeweils unter einem Winkel ($\alpha$) von etwa 30 bis 50 Grad zur Längsachse verlaufenden Fasern umfasst, wobei die Fasern der Textilstreifen (11b, 11c) entgegengesetzt zueinander orientiert sind.

3. Verfahren nach Anspruch 1 oder 2, **dadurch gekennzeichnet, dass** der mindestens eine Gummistreifen (11a) auf eine solche Länge ($l_3$) zugeschnitten wird, dass dessen Enden nach dem Zuführen des Kombinationsbauteiles (11) auf die Reifenaufbautrommel (30) auf Stoß aneinander zur Anlage kommen.

4. Verfahren nach einem der Ansprüche 1 bis 3, **dadurch gekennzeichnet, dass** die Textilstreifen (11b, 11c) auf eine solche Länge ($l_1$, $l_2$) zugeschnitten werden, dass deren Enden nach der Zuführung des Kombinationsbauteiles (11) auf die Reifenaufbautrommel (30) um eine Spleißzone einer Länge ($l_{SPL1}$, $l_{SPL2}$) überlappen, die jeweils einem 4 bis 10 Fasern in den Textilstreifen (11b, 11c) umfassenden Längenabschnitt derselben entsprechen.

5. Verfahren nach Anspruch 4, **dadurch gekennzeichnet, dass** das Kombinationsbauteil (11) so ausgebildet wird, dass ein Ende des Textilstreifens (11b) das benachbarte Ende des Gummistreifens (11a) um eine Distanz ($d_{TZG}$) zuzüglich der Summe aus der Länge der Spleißzone ($l_{SPL1}$) und einer Spleißprojektionslänge ($p_{KSK1}$) überragt und ein benachbartes Ende des Textilstreifens (11c) das benachbarte Ende des Textilstreifens (11b) um eine Distanz ($d_{TZT}$) zuzüglich der Summe aus der Länge der Spleißzone ($l_{SPL2}$) und einer Spleißprojektionslänge ($p_{KSK2}$) überragt.

6. Verfahren nach Anspruch 5, **dadurch gekennzeichnet, dass** die Distanzen ($d_{TZG}$, $D_{TZT}$) jeweils mindestens 18 mm betragen.

7. Verfahren nach einem der Ansprüche 1 bis 6, **dadurch gekennzeichnet, dass** die Längen ($l_1$, $l_2$) der Textilstreifen (11b, 11c) und des Gummistreifens (11a) im Kombinationsbauteil (11) so bemessen werden, dass nach Zuführung auf die Reifenaufbautrommel (30) die jeweiligen Enden der Textilstreifen (11b, 11c) und des Gummistreifens (11a) gemeinsam in einem Winkelsegment ($\omega$) von 70 bis 83 ° auf dem Umfang der Reifenaufbautrommel (30) zum Liegen kommen und ohne Drehung der Reifenaufbautrommel (30) miteinander verbunden werden.

8. Verfahren nach einem der Ansprüche 1 bis 7, **dadurch gekennzeichnet, dass** der Reifenwulst einen Wulstkern (5), Kernreiter (8) und einen Wulstverstärker umfasst und der Wulstverstärker aus dem Kombinationsbauteil (11) gemäß einem der vorangehenden Ansprüche hergestellt wird.

**Claims**

1. Method for producing a vehicle pneumatic tyre with a tyre bead, in the case of which method tyre components for configuring the tyre bead are fed to a tyre building drum (30), are laid onto the latter, and are joined to one another in the region of the ends, the tyre components comprising at least one rubber strip (11a) and strip-shaped textile strips (11b, 11c), **characterized in that**, before they are fed to the tyre building drum (30), the tyre components are cut to form portions in the required length, are laid on one another, and are connected to one another to form a combination component (11), and the combination component (11) is subsequently fed to the tyre building drum (30).

2. Method according to Claim 1, **characterized in that** the combination component (11) comprises two textile strips (11b, 11c) in each case with fibres which run at an angle ($\alpha$) of approximately 30 to 50 degrees with respect to the longitudinal axis, the fibres of the textile strips (11b, 11c) being oriented in an opposed manner with respect to one another.

3. Method according to Claim 1 or 2, **characterized in that** the at least one rubber strip (11a) is cut to such a length ($l_3$) that its ends come into abutting contact with one another after the combination component (11) is fed onto the tyre building drum (30).

4. Method according to one of Claims 1 to 3, **characterized in that** the textile strips (11b, 11c) are cut to such a length ($l_1$, $l_2$) that, after the combination component (11) is fed onto the tyre building drum (30), their ends overlap by a splicing zone with a length ($l_{SPL1}$, $l_{SPL2}$), which lengths in each case correspond to a length portion of the textile strips (11b, 11c) which comprises from 4 to 10 fibres therein.

**5.** Method according to Claim 4, **characterized in that** the combination component (11) is configured in such a way that one end of the textile strip (11b) protrudes beyond the adjacent end of the rubber strip (11a) by a distance ($d_{TZC}$) plus the sum of the length of the splicing zone ($l_{SPL1}$) and a splicing projection length ($p_{KSK1}$), and an adjacent end of the textile strip (11c) protrudes beyond the adjacent end of the textile strip (11b) by a distance ($d_{TZT}$) plus the sum of the length of the splicing zone ($l_{SPLZ}$) and a splicing projection length ($p_{KSK2}$).

**6.** Method according to Claim 5, **characterized in that** the distances ($d_{TZG}$, $D_{TZT}$) are in each case at least 18 mm.

**7.** Method according to one of Claims 1 to 6, **characterized in that** the lengths ($l_1$, $l_2$) of the textile strips (11b, 11c) and the rubber strip (11a) in the combination component (11) are dimensioned in such a way that, after feeding onto the tyre building drum (30), the respective ends of the textile strips (11b, 11c) and the rubber strip (11a) come to lie together in an angular segment ($\omega$) of from 70 to 83° on the circumference of the tyre building drum (30) and are connected to one another without rotation of the tyre building drum (30).

**8.** Method according to one of Claims 1 to 7, **characterized in that** the tyre bead comprises a bead core (5), a core filler (8) and a cable bead, and the cable bead is produced from the combination component (11) according to one of the preceding claims.

**Revendications**

**1.** Procédé de fabrication d'un pneumatique de véhicule avec un talon de pneu, dans lequel des composants de pneu sont amenés à un tambour de confection de pneus (30) pour réaliser le talon de pneu, sont posés sur celui-ci et sont assemblés les uns aux autres dans la zone des extrémités, les composants de pneu comprenant au moins une bande de caoutchouc (11a) ainsi que des bandes textiles (11b, 11c) en forme de bande, **caractérisé en ce qu'**avant d'être amenés au tambour de confection de pneus (30), les composants de pneu sont découpés en sections de la longueur requise, sont posés les uns sur les autres et sont reliés les uns aux autres pour former un composant combiné (11), puis le composant combiné (11) est amené au tambour de confection de pneus (30).

**2.** Procédé selon la revendication 1, **caractérisé en ce que** le composant combiné (11) comprend deux bandes textiles (11b, 11c) ayant chacune des fibres s'étendant selon un angle ($\alpha$) d'environ 30 à 50 degrés par rapport à l'axe longitudinal, les fibres des bandes textiles (11b, 11c) étant orientées en sens inverse les unes des autres.

**3.** Procédé selon la revendication 1 ou 2, **caractérisé en ce que** l'au moins une bande de caoutchouc (11a) est découpée à une longueur ($l_3$) telle que ses extrémités viennent en butée l'une contre l'autre après l'amenée du composant combiné (11) sur le tambour de confection de pneus (30).

**4.** Procédé selon l'une quelconque des revendications 1 à 3, **caractérisé en ce que** les bandes textiles (11b, 11c) sont découpées à une longueur ($l_1$, $l_2$) telle qu'après l'amenée du composant combiné (11) sur le tambour de confection de pneus (30), leurs extrémités se chevauchent sur une zone d'épissure d'une longueur ($l_{SPL1}$, $l_{SPL2}$) correspondant respectivement à une section de longueur comprenant 4 à 10 fibres dans les bandes textiles (11b, 11c).

**5.** Procédé selon la revendication 4, **caractérisé en ce que** le composant combiné (11) est réalisé de manière à ce qu'une extrémité de la bande textile (11b) dépasse l'extrémité voisine de la bande de caoutchouc (11a) d'une distance ($d_{TZG}$) plus la somme de la longueur de la zone d'épissure ($l_{SPL1}$) et d'une longueur de projection d'épissure ($p_{KSK1}$), et une extrémité voisine de la bande textile (11c) dépasse l'extrémité voisine de la bande textile (11b) d'une distance ($d_{TZT}$) plus la somme de la longueur de la zone d'épissure ($l_{SPL2}$) et d'une longueur de projection d'épissure ($p_{KSK2}$).

**6.** Procédé selon la revendication 5, **caractérisé en ce que** les distances ($d_{TZG}$, $D_{TZT}$) sont respectivement d'au moins 18 mm.

**7.** Procédé selon l'une quelconque des revendications 1 à 6, **caractérisé en ce que** les longueurs ($l_1$, $l_2$) des bandes textiles (11b, 11c) et de la bande de caoutchouc (11a) dans le composant combiné (11) sont dimensionnées de telle sorte qu'après avoir été amenées sur le tambour de confection de pneus (30), les extrémités respectives des bandes textiles (11b, 11c) et de la bande de caoutchouc (11a) viennent se placer ensemble sur la circonférence du tambour de confection de pneus (30) dans un segment angulaire ($\omega$) de 70 à 83° et sont reliées entre elles sans rotation du tambour de confection de pneus (30).

8. Procédé selon l'une quelconque des revendications 1 à 7, **caractérisé en ce que** le talon de pneu comprend une tringle (5), des bourrages sur tringle (8) et un renforçateur de talon, et le renforçateur de talon est fabriqué à partir du composant combiné (11) selon l'une quelconque des revendications précédentes.

**Fig. 1**

EP 4 251 411 B1

Fig. 2

EP 4 251 411 B1

12

Fig. 3

EP 4 251 411 B1

Fig. 4.1

EP 4 251 411 B1

Fig. 4.2

**Fig. 5**

EP 4 251 411 B1

**Fig. 6**

Fig. 7

EP 4 251 411 B1

**Fig. 8**

**Fig. 9**

**Fig. 10**

EP 4 251 411 B1

**Fig. 11**

EP 4 251 411 B1

**Fig. 12**

Fig. 13

Fig. 14

**Fig. 15**

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4439010 C1
- DE 102014225142 A1

- EP 1897681 A1
- WO 2005102741 A1